# EUROPEAN PATENT APPLICATION

(11) **EP 4 704 181 A1**
(43) Date of publication of application: **04.03.2026**
(21) Application number: 24795762.4
(22) Date of filing: 29.03.2024
(51) Int. Cl.: H01M 4/505, C01G 45/12, H01M 4/62, H01M 4/04, H01M 10/0525

(54) **LITHIUM MANGANATE POSITIVE ELECTRODE MATERIAL AND PREPARATION METHOD THEREFOR**

(30) Priority: 28.04.2023 CN 202310485057
(71) Applicant: BASF Shanshan Battery Materials Co., Ltd., Changsha, Hunan 410205 (CN)
(72) Inventor: HU, Jin, Changsha, Hunan 410205 (CN); LONG, Bo, Changsha, Hunan 410205 (CN); LI, Juan, Changsha, Hunan 410205 (CN); GUI, Yina, Changsha, Hunan 410205 (CN); WANG, Ke, Changsha, Hunan 410205 (CN)
(74) Representative: Kovári, Zoltán
(86) International application number: PCT/CN2024/084789
(87) International publication number: WO 2024/222381

(57) **Abstract**

Provided is a lithium manganese oxide cathode material with a chemical formula of LiₐAl_{b}Mn_{2-b-c}B_{c}O_{4-d}F_{d}, where 0.96 ≤ a ≤ 1.15, 0 < b ≤ 0.3, 0 < c ≤ 0.03, and 0 < d <_ 0.03. A secondary particle of the lithium manganese oxide cathode material is spherical. A fluorine penetrates into the lithium manganese oxide cathode material, and a fluorine content presents a decreasing gradient distribution from a surface to a center of a lithium manganese oxide cathode material particle. The present disclosure also provides a preparation method of the lithium manganese oxide cathode material, including: mixing a lithium source, a manganese source, and a boron source, and conducting first sintering to produce a lithium manganese oxide cathode material precursor; and mixing the lithium manganese oxide cathode material precursor with an aluminum source and a fluorine source, and conducting second sintering to produce the lithium manganese oxide cathode material. The gradient distribution of fluorine in the lithium manganese oxide cathode material can be adjusted to enhance the stability of a crystal structure inside the lithium manganese oxide cathode material and prevent an internal structure of the lithium manganese oxide cathode material from collapsing during a charge-discharge process.

## Description

### TECHNICAL FIELD

The present disclosure belongs to the field of lithium-ion battery materials, and particularly relates to a spherical lithium manganese oxide cathode material and a preparation method thereof.

### BACKGROUND

Lithium-ion batteries are efficient, eco-friendly, and renewable energy devices. Due to advantages such as high energy density, light weight, and small self-discharge, lithium-ion batteries have become the major power sources in traditional 3C products, electric vehicles, energy storage, and other fields. A cathode material is one of the key components of a lithium-ion battery. The performance of a cathode material directly determines the performance and life of a lithium-ion battery.

Currently, the most common cathode materials for lithium-ion batteries on the market are mainly lithium cobalt oxide, ternary materials, and lithium iron phosphate. The lithium cobalt oxide has disadvantages such as scarce cobalt resource reserves and high cost, and will undergo thermal runaway reactions when in use, posing safety risks. Moreover, the lithium cobalt oxide materials demonstrate insufficient structural stability, and are prone to decomposition at high temperatures. The ternary materials primarily include lithium nickel manganese cobalt oxide and lithium nickel cobalt aluminum oxide. Although the ternary materials have a lower cost than the lithium cobalt oxide cathode materials, the ternary materials suffer from issues such as temperature sensitivity and capacity degradation. The lithium iron phosphate has a relatively-low capacity, and thus is unsuitable for high-capacity batteries. Consequently, the development of novel cathode materials with high capacity, long lifespan, and low cost has become a research hotspot in recent years.

Lithium manganese oxide has attracted significant attention as a novel cathode material due to advantages such as large capacity, high operating voltage, excellent safety, abundant resources, and low cost. However, lithium manganese oxide is prone to manganese dissolution during cycling, resulting in a reduced cycling life. As a result, the development of lithium manganese oxide cathode materials is greatly limited. The manganese dissolution in lithium manganese oxide is currently improved mainly through doping or coating. Modifying lithium manganese oxide with fluorine is an effective technical approach. However, the existing techniques enable an insufficient penetration depth of fluorine, and are merely restricted to the surface coating of fluorine. Therefore, it has always failed to achieve the optimal improvement effect for manganese dissolution.

### SUMMARY

A technical problem to be solved by the present disclosure: A lithium manganese oxide cathode material and a preparation method thereof are provided to overcome the deficiencies and shortcomings mentioned in the above background.

In order to solve the above technical problem, the present disclosure provides the following technical solutions:

The present disclosure provides a lithium manganese oxide cathode material, where a chemical formula of the lithium manganese oxide cathode material is LiₐAl_{b}Mn_{2-b-c}B_{c}O_{4-d}F_{d}, where 0.96 ≤ a ≤ 1.15, 0 < b ≤ 0.3, 0 < c ≤ 0.03, and 0 < d ≤ 0.03; a secondary particle of the lithium manganese oxide cathode material is spherical; and a fluorine penetrates into the lithium manganese oxide cathode material, and a fluorine content presents a decreasing gradient distribution from a surface to a center of a lithium manganese oxide cathode material particle.

The decreasing gradient distribution of fluorine from the surface to the center of the lithium manganese oxide cathode material particle can enhance a crystal structure of the lithium manganese oxide cathode material to some extent and mitigate the Jahn-Teller effect, thereby reducing the manganese dissolution caused by structural distortion. Additionally, the penetration of fluorine can alter an electronic band structure of the lithium manganese oxide cathode material, thereby improving the electronic conductivity and electrochemical reactivity.

In the lithium manganese oxide cathode material, preferably, a fluorine content in a spherical region at a distance of 0.22 R ≤ L ≤ R from a surface of the lithium manganese oxide cathode material particle is 20% to 40% of a fluorine content in the entire lithium manganese oxide cathode material; and a fluorine content in a region at a distance of L < 0.22 R from the surface of the lithium manganese oxide cathode material particle is 60% to 80% of the fluorine content in the entire lithium manganese oxide cathode material, where R is an equivalent radius of the secondary particle of the lithium manganese oxide cathode material.

In the lithium manganese oxide cathode material, preferably, a sphericity of the lithium manganese oxide cathode material is 0.8 to 1. The dissolution in lithium manganese oxide primarily occurs on a (111) crystal plane. This is because a structure of the (111) crystal plane in lithium manganese oxide is more susceptible to erosion by ions in an electrolyte than other crystal planes, leading to the dissolution of manganese ions. Thus, a proportion of the (111) crystal plane in lithium manganese oxide can be reduced to mitigate the dissolution of manganese ions, thereby enhancing the cycling life and stability of a lithium-ion battery. Studies have shown that spherical lithium manganese oxide has a smaller proportion of the (111) crystal plane than octahedral lithium manganese oxide, and a dissolution amount of spherical lithium manganese oxide in an electrolyte is approximately 40% lower than a dissolution amount of octahedral lithium manganese oxide in the electrolyte. Therefore, controlling the sphericity of the lithium manganese oxide cathode material at 0.8 to 1 to make the lithium manganese oxide cathode material nearly spherical can effectively reduce the manganese dissolution.

In the lithium manganese oxide cathode material, preferably, a manganese dissolution amount in the lithium manganese oxide cathode material is 0.01% to 0.1%.

In the lithium manganese oxide cathode material, preferably, the secondary particle of the lithium manganese oxide cathode material has D50 of 10 µm to 16 µm and a particle size distribution coefficient Span of 0.5 to 0.9.

As a general inventive concept, the present disclosure also provides a preparation method of the lithium manganese oxide cathode material, including the following steps:
(1) weighing a lithium source, a manganese source, and a boron source according to a stoichiometric ratio of lithium, manganese, and boron in the chemical formula, mixing the lithium source, the manganese source, and the boron source, and conducting first sintering to produce a lithium manganese oxide cathode material precursor; and
(2) mixing the lithium manganese oxide cathode material precursor with an aluminum source and a fluorine source according to a stoichiometric ratio in the chemical formula, conducting second sintering, and sieving to produce the lithium manganese oxide cathode material.

In the preparation method, a boron source is introduced in the step (1). Boron acts as a flux to lower a desired reaction temperature, thereby reducing the potential volatilization of Li at a high temperature and decreasing the energy consumption. Boron can modify a surface of polycrystalline lithium manganese oxide to promote the uniform growth of primary particles. Boron can also serve as a binder to tightly bonding polycrystalline primary particles together, thereby enhancing a mechanical strength of the material and effectively maintaining the high sphericity of the precursor.

In the preparation method, both an aluminum source and a fluorine source are also introduced in the step (2). Aluminum can react with fluorine to produce aluminum fluoride with high ionic conductivity and low resistivity. As a result, the penetration and diffusion of fluorine in the lithium manganese oxide cathode material can be promoted to allow a gradient distribution of fluorine inside the material. The high-concentration fluorine on the surface is combined with aluminum to form a physical coating layer of aluminum fluoride, which can effectively mitigate the corrosion of an electrolyte to an inside of the material, stabilize a crystal structure of the lithium manganese oxide cathode material, and reduce the manganese dissolution, thereby improving the cycling life and energy density of a battery.

In the preparation method, due to a synergistic effect of uniformly bulk-doped boron and aluminum, the lithium manganese oxide cathode material still can retain the high sphericity of the precursor during a sintering process.

In the preparation method, preferably, in the step (1), the first sintering is conducted at 700°C to 850°C for 4 h to 10 h.

In the preparation method, preferably, in the step (2), the second sintering is conducted at 300°C to 600°C for 2 h to 8 h.

In the preparation method, preferably, in the step (1), the manganese source includes at least one selected from the group consisting of aluminum-doped manganese carbonate, aluminum-doped trimanganese tetraoxide, aluminum-doped dimanganese trioxide, aluminum-doped manganese oxyhydroxide, and aluminum-doped manganese dioxide. The selection of an aluminum-doped manganese source enables the generation of a precursor with aluminum uniformly bulk-doped, thereby stabilizing a crystal structure of lithium manganese oxide and suppressing the formation of oxygen defects during a synthetic process of lithium manganese oxide. Thus, the material undergoes a single-phase reaction across both high-voltage and low-voltage regions during a charge process, thereby enhancing the cycling performance.

In the preparation method, preferably, in the step (1), the lithium source includes at least one selected from the group consisting of lithium carbonate and lithium hydroxide; and the boron source includes at least one selected from the group consisting of H₃BO₃ and B₂O₃.

In the preparation method, preferably, in the step (2), the fluorine source includes at least one selected from the group consisting of lithium fluoride, ammonium fluoride, aluminum fluoride, a polyvinylidene fluoride homopolymer, a polyvinylidene fluoride copolymer, a polyvinylidene fluoride-hexafluoropropylene polymer, and polytetrafluoroethylene; and the aluminum source includes at least one selected from the group consisting of aluminum hydroxide, aluminum oxide, and aluminum nitrate.

Compared with the prior art, the present disclosure has the following advantages:
(1) In the present disclosure, the gradient distribution of fluorine in the lithium manganese oxide cathode material can be adjusted to enhance the stability of a crystal structure inside the lithium manganese oxide cathode material and prevent an internal structure of the lithium manganese oxide cathode material from collapsing during a charge-discharge process. In addition, in a region at a distance of L < 0.22 R from the surface, high-concentration fluorine can form a protective aluminum fluoride layer on the surface of the cathode material. This protective aluminum fluoride layer can prevent the corrosion of an electrolyte to an inside of the material to reduce the dissolution of divalent manganese in the electrolyte, thereby improving the energy density of a battery.
(2) By controlling the sphericity of the lithium manganese oxide cathode material at 0.8 to 1, the present disclosure can reduce the proportion of the (111) crystal plane in lithium manganese oxide to mitigate the dissolution of divalent manganese ions, thereby enhancing the cycling life and stability of a lithium-ion battery.
(3) In the preparation method of the present disclosure, both an aluminum source and a fluorine source are added. Aluminum can react with fluorine to produce aluminum fluoride with high ionic conductivity and low resistivity, which can promote the gradient distribution of fluorine in the lithium manganese oxide cathode material.
(4) In the preparation method of the present disclosure, a two-stage low-temperature sintering process is adopted to produce a spherical lithium manganese oxide cathode material with a decreasing gradient distribution of fluorine from a surface to a center of a material particle while adding only a small amount of fluorine. The preparation method has a low production cost and can be easily industrialized.

### BRIEF DESCRIPTION OF THE DRAWINGS

FIG. 1 is an electron probe microanalysis cross-sectional distribution map of fluorine in a lithium manganese oxide cathode material prepared in Example 1 of the present disclosure;
FIG. 2 is a scanning electron microscopy (SEM) image of a lithium manganese oxide cathode material prepared in Example 3 of the present disclosure;
FIG. 3 is a computer-automated identification equivalent diagram of sphericity of the lithium manganese oxide cathode material prepared in Example 3 of the present disclosure;
FIG. 4 shows charge/discharge curves of the lithium manganese oxide cathode material prepared in Example 3 of the present disclosure;
FIG. 5 shows rate performance at 7 C/0.2 C of lithium manganese oxide cathode materials prepared in the examples and comparative examples of the present disclosure; and
FIG. 6 shows capacity retention rates of the lithium manganese oxide cathode materials prepared in the examples and comparative examples of the present disclosure during cycling.

### DETAILED DESCRIPTION

In order to facilitate the understanding of the present disclosure, the present disclosure is described in detail below in conjunction with the accompanying drawings of the specification and the preferred examples, but the protection scope of the present disclosure is not limited to the following specific examples.

Unless otherwise defined, all technical terms used hereinafter have the same meanings as commonly understood by those skilled in the art. The technical terms used herein are merely for the purpose of describing specific examples, and are not intended to limit the protection scope of the present disclosure.

Unless otherwise specified, various raw materials, reagents, instruments, devices, etc. used in the present disclosure can be purchased from the market or can be prepared by the existing methods.

### Example 1

In this example, a lithium manganese oxide cathode material with a chemical formula of Li_{1.05}Al_{0.2}Mn_{1.78}B_{0.02}O_{3.982}F_{0.018} is provided. A secondary particle of the lithium manganese oxide cathode material is spherical with a sphericity of 0.894, and has D50 of 14.5 µm and a particle size distribution coefficient Span of 0.8. Fluorine penetrates into the lithium manganese oxide cathode material, and a fluorine content presents a decreasing gradient distribution from a surface to a center of a lithium manganese oxide cathode material particle. A fluorine content in a spherical region at a distance of 0.22 R ≤ L ≤ R from a surface of the lithium manganese oxide cathode material particle is 23% of a fluorine content in the entire lithium manganese oxide cathode material, and a fluorine content in a region at a distance of L < 0.22 R from the surface of the lithium manganese oxide cathode material particle is 77% of the fluorine content in the entire lithium manganese oxide cathode material, where R is an equivalent radius of the secondary particle of the lithium manganese oxide cathode material.

In this example, a preparation method of the lithium manganese oxide cathode material is provided, including the following steps:
(1) (Mn_{0.95}Al_{0.05})₃O₄, lithium carbonate, and boric acid were weighed according to a stoichiometric ratio of 1.78:1.05:0.02, then thoroughly mixed in a high-speed mixer, then transferred to a roller hearth kiln, and heated at a heating rate of 3°C/min to 760°C and sintered for 4 h in an air atmosphere to produce a first sintered material. The first sintered material was cooled, then crushed by a jet mill, and sieved through a 300-mesh hand sieve to produce a spherical polycrystalline lithium manganese oxide cathode material doped with aluminum and boron.
(2) The spherical polycrystalline lithium manganese oxide cathode material obtained in the step (1), aluminum hydroxide, and polyvinylidene fluoride were weighed according to a stoichiometric ratio of 1:0.05:0.018, then thoroughly mixed in a high-speed mixer, then transferred to a roller hearth kiln, and heated at a heating rate of 2°C/min to 300°C and sintered for 5 h in an air atmosphere to produce a second sintered material. The second sintered material was cooled and then sieved through a 300-mesh hand sieve to produce the lithium manganese oxide cathode material.

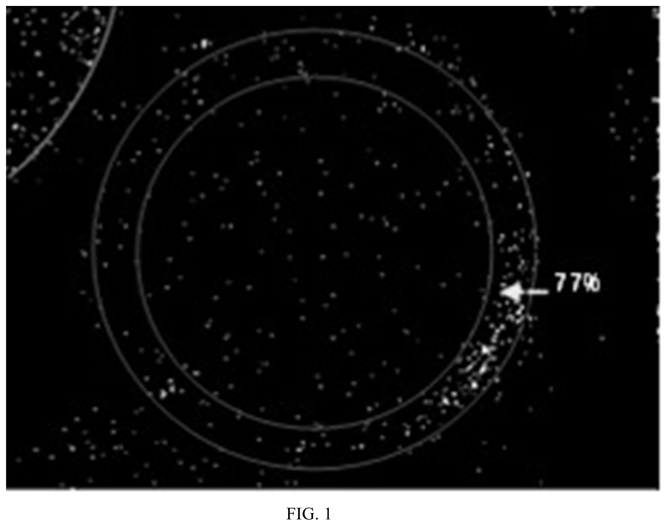

A distribution of fluorine in the lithium manganese oxide cathode material prepared in this example was characterized through cross-sectional electron probe microanalysis, and results were shown in FIG. 1. The fluorine content in the region at the distance of L < 0.22 R from the surface of the lithium manganese oxide cathode material particle was 77% of the fluorine content in the entire lithium manganese oxide cathode material. The fluorine content in the spherical region at the distance of 0.22 R ≤ L ≤ R from the surface of the lithium manganese oxide cathode material particle was 23% of the fluorine content in the entire lithium manganese oxide cathode material.

A computer was trained to automatically identify particles, and a particle size of the lithium manganese oxide cathode material in a tungsten filament-based SEM image was measured. A sphericity of the lithium manganese oxide cathode material was calculated to be 0.894.

Electrical performance testing: The lithium manganese oxide cathode material prepared in this example was made into a coin cell. The active material, a conductive agent, and a binder were mixed at a ratio of 92% : 5% : 3% and fabricated into a positive electrode sheet. A metallic lithium sheet was adopted as a negative electrode sheet. A 2032 coin cell was fabricated with the positive electrode sheet and the negative electrode sheet. The coin cell was subjected to a charge-discharge test in a Wuhan Land electrochemical test cabinet at an operating voltage of 3.0 V to 4.3 V and a rate of 1 C/1 C. A capacity retention rate after 50 cycles at 60°C was 98.0%. At room temperature, a rate performance test was conducted at 0.1 C, 0.2 C, 0.5 C, 1 C, 2 C, 5 C, and 7 C. A rate performance ratio 7 C/0.2 C was 89.9%.

Mn dissolution testing: The lithium manganese oxide cathode material prepared in this example was made into a half coin cell by the same fabrication method as above. The half coin cell was placed in a 60°C incubator and subjected to constant-voltage charging for 30 h under charge states of 50% and 100%. The half coin cell was then disassembled, and a negative electrode sheet was taken out, cleaned with dimethyl carbonate to remove the residual electrolyte on a surface, and then dissolved in a hydrochloric acid solution. A Mn content was determined through inductively coupled plasma (ICP) analysis. Mn dissolution amounts of the lithium manganese oxide cathode material under the charge states of 50% and 100% were 0.069 wt% and 0.085 wt%, respectively.

### Example 2

In this example, a lithium manganese oxide cathode material with a chemical formula of Li_{1.05}Al_{0.2}Mn_{1.78}B_{0.02}O_{3.99}F_{0.01} is provided. A secondary particle of the lithium manganese oxide cathode material is spherical with a sphericity of 0.869, and has D50 of 15.2 µm and a particle size distribution coefficient Span of 0.88. Fluorine penetrates into the lithium manganese oxide cathode material, and a fluorine content presents a decreasing gradient distribution from a surface to a center of a lithium manganese oxide cathode material particle. A fluorine content in a spherical region at a distance of 0.22 R ≤ L ≤ R from a surface of the lithium manganese oxide cathode material particle is 31% of a fluorine content in the entire lithium manganese oxide cathode material, and a fluorine content in a region at a distance of L < 0.22 R from the surface of the lithium manganese oxide cathode material particle is 69% of the fluorine content in the entire lithium manganese oxide cathode material, where R is an equivalent radius of the secondary particle of the lithium manganese oxide cathode material.

In this example, a preparation method of the lithium manganese oxide cathode material is provided, including the following steps:
(1) (Mn_{0.95}Al_{0.05})₃O₄, lithium carbonate, and boric acid were weighed according to a stoichiometric ratio of 1.78:1.05:0.02, then thoroughly mixed in a high-speed mixer, then transferred to a roller hearth kiln, and heated at a heating rate of 3°C/min to 760°C and sintered for 4 h in an air atmosphere to produce a first sintered material. The first sintered material was cooled, then crushed by a jet mill, and sieved through a 300-mesh hand sieve to produce a spherical polycrystalline lithium manganese oxide cathode material doped with aluminum and boron.
(2) The spherical polycrystalline lithium manganese oxide cathode material obtained in the step (1), aluminum hydroxide, and polyvinylidene fluoride were weighed according to a stoichiometric ratio of 1:0.05:0.01, then thoroughly mixed in a high-speed mixer, then transferred to a roller hearth kiln, and heated at a heating rate of 2°C/min to 450°C and sintered for 5 h in an air atmosphere to produce a second sintered material. The second sintered material was cooled and then sieved through a 300-mesh hand sieve to produce the lithium manganese oxide cathode material.

A distribution of fluorine in the lithium manganese oxide cathode material was characterized through cross-sectional electron probe microanalysis. A fluorine content presented a decreasing gradient distribution from a surface to a center of the lithium manganese oxide cathode material particle. The fluorine content in the spherical region at the distance of 0.22 R ≤ L ≤ R from the surface of the lithium manganese oxide cathode material particle was 31% of the fluorine content in the entire lithium manganese oxide cathode material. The fluorine content in the region at the distance of L < 0.22 R from the surface of the lithium manganese oxide cathode material particle was 69% of the fluorine content in the entire lithium manganese oxide cathode material.

A computer was trained to automatically identify particles, and a particle size of the lithium manganese oxide cathode material in a tungsten filament-based SEM image was measured. A sphericity of the lithium manganese oxide cathode material was calculated to be 0.869.

According to the electrical performance testing and Mn dissolution testing methods in Example 1, properties of the lithium manganese oxide cathode material prepared in this example were determined. According to results, a coin cell fabricated with the lithium manganese oxide cathode material in this example had a capacity retention rate of 98.2% after 50 cycles at 1 C and 60°C and a rate performance ratio 7 C/0.2 C of 91.3% at room temperature. Moreover, Mn dissolution amounts of the lithium manganese oxide cathode material under the charge states of 50% and 100% were 0.055 wt% and 0.071 wt%, respectively.

### Example 3

In this example, a lithium manganese oxide cathode material with a chemical formula of Li_{1.05}Al_{0.2}Mn_{1.78}B_{0.02}O_{3.97}F_{0.03} is provided. A secondary particle of the lithium manganese oxide cathode material is spherical with a sphericity of 0.906, and has D50 of 14.5 µm and a particle size distribution coefficient Span of 0.84. Fluorine penetrates into the lithium manganese oxide cathode material, and a fluorine content presents a decreasing gradient distribution from a surface to a center of a lithium manganese oxide cathode material particle. A fluorine content in a spherical region at a distance of 0.22 R ≤ L ≤ R from a surface of the lithium manganese oxide cathode material particle is 38% of a fluorine content in the entire lithium manganese oxide cathode material, and a fluorine content in a region at a distance of L < 0.22 R from the surface of the lithium manganese oxide cathode material particle is 62% of the fluorine content in the entire lithium manganese oxide cathode material, where R is an equivalent radius of the secondary particle of the lithium manganese oxide cathode material.

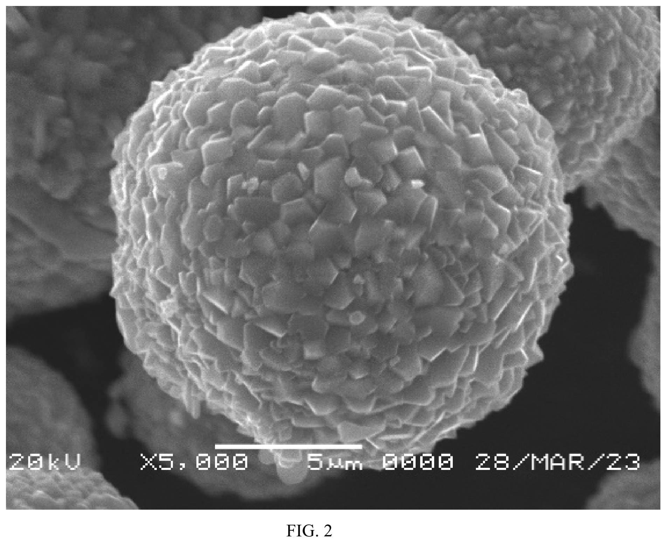

In this example, a preparation method of the lithium manganese oxide cathode material is provided, including the following steps:
(1) (Mn_{0.95}Al_{0.05})₃O₄, lithium carbonate, and boric acid were weighed according to a stoichiometric ratio of 1.78:1.05:0.02, then thoroughly mixed in a high-speed mixer, then transferred to a roller hearth kiln, and heated at a heating rate of 3°C/min to 760°C and sintered for 4 h in an air atmosphere to produce a first sintered material. The first sintered material was cooled, then crushed by a jet mill, and sieved through a 300-mesh hand sieve to produce a spherical polycrystalline lithium manganese oxide cathode material doped with aluminum and boron.
(2) The spherical polycrystalline lithium manganese oxide cathode material obtained in the step (1), aluminum hydroxide, and polyvinylidene fluoride were weighed according to a stoichiometric ratio of 1:0.05:0.03, then thoroughly mixed in a high-speed mixer, then transferred to a roller hearth kiln, and heated at a heating rate of 2°C/min to 600°C and sintered for 5 h in an air atmosphere to produce a second sintered material. The second sintered material was cooled and then sieved through a 300-mesh hand sieve to produce the lithium manganese oxide cathode material. An SEM image of the lithium manganese oxide cathode material was shown in FIG. 2. As shown in FIG. 2, the secondary particle of the lithium manganese oxide cathode material was spherical.

A distribution of fluorine in the lithium manganese oxide cathode material was characterized through cross-sectional electron probe microanalysis. A fluorine content presented a gradient distribution from a surface to a center of the lithium manganese oxide cathode material particle. The fluorine content in the spherical region at the distance of 0.22 R ≤ L ≤ R from the surface of the lithium manganese oxide cathode material particle was 38% of the fluorine content in the entire lithium manganese oxide cathode material. The fluorine content in the region at the distance of L < 0.22 R from the surface of the lithium manganese oxide cathode material particle was 62% of the fluorine content in the entire lithium manganese oxide cathode material.

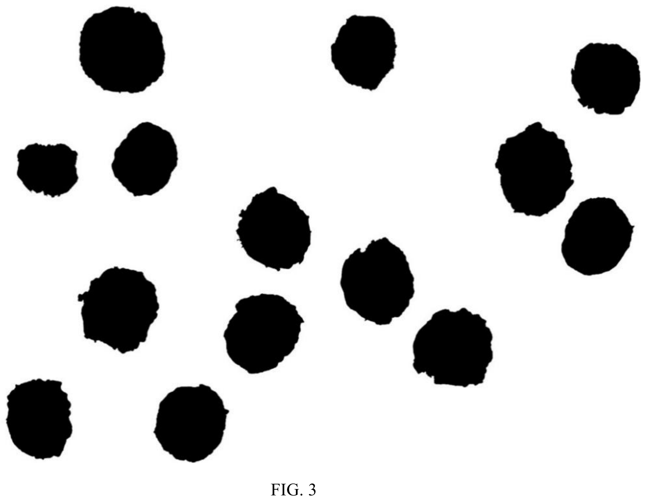

A computer was trained to automatically identify particles, and a particle size of the lithium manganese oxide cathode material in a tungsten filament-based SEM image was measured. A computer-automated identification equivalent diagram of particles was shown in FIG. 3. A sphericity of the lithium manganese oxide cathode material was calculated to be 0.906.

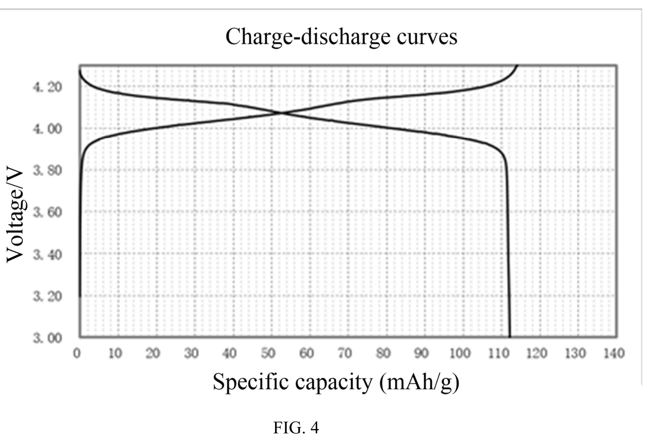

According to the electrical performance testing and Mn dissolution testing methods in Example 1, properties of the lithium manganese oxide cathode material prepared in this example were determined. According to results, a coin cell fabricated with the lithium manganese oxide cathode material in this example had a capacity retention rate of 98.7% after 50 cycles at 1 C and 60°C and a rate performance ratio 7 C/0.2 C of 94.2% at room temperature. Charge-discharge curves of the coin cell were shown in FIG. 4. At a current density of 0.1 C, the initial charge capacity was 114.9 mAh/g, the initial discharge capacity was 112.6 mAh/g, and the initial charge/discharge efficiency was 98.4%. Moreover, Mn dissolution amounts of the lithium manganese oxide cathode material under the charge states of 50% and 100% were 0.035 wt% and 0.043 wt%, respectively.

### Comparative Example 1

A preparation method of a lithium manganese oxide cathode material in this comparative example is basically the same as the preparation method in Example 1, except that, in the step (2), aluminum hydroxide is not added, and other process parameters are the same as those in Example 1. A chemical formula of the lithium manganese oxide cathode material is Li_{1.05}Al_{0.15}Mn_{1.83}B_{0.02}O_{3.982}F_{0.018}. A distribution of fluorine in the lithium manganese oxide cathode material prepared in this comparative example was characterized through cross-sectional electron probe microanalysis. A fluorine content in a region at a distance of L < 0.22 R from a surface of a lithium manganese oxide cathode material particle is 100% of a fluorine content in the entire lithium manganese oxide cathode material, where R is an equivalent radius of a secondary particle of the lithium manganese oxide cathode material.

According to the electrical performance testing and Mn dissolution testing methods in Example 1, properties of the lithium manganese oxide cathode material prepared in this comparative example were determined. According to results, a coin cell fabricated with the lithium manganese oxide cathode material in this comparative example had a capacity retention rate of 97.9% after 50 cycles at 1 C and 60°C and a rate performance ratio 7 C/0.2 C of 87.0% at room temperature. Moreover, Mn dissolution amounts of the lithium manganese oxide cathode material under the charge states of 50% and 100% were 0.086 wt% and 0.109 wt%, respectively.

### Comparative Example 2

A lithium manganese oxide cathode material in this comparative example has a chemical formula of Li_{1.05}Al_{0.2}Mn_{1.78}B_{0.02}O_{3.97}F_{0.03}. A secondary particle of the lithium manganese oxide cathode material is spherical with a sphericity of 0.874, and has D50 of 14.9 µm and a particle size distribution coefficient Span of 0.81. Fluorine is uniformly distributed inside the lithium manganese oxide cathode material.

A preparation method of the lithium manganese oxide cathode material in this comparative example includes the following steps:
(Mn_{0.95}Al_{0.05})₃O₄, lithium carbonate, boric acid, and polyvinylidene fluoride were weighed according to a stoichiometric ratio of 1.78:1.05:0.02:0.03, then thoroughly mixed in a high-speed mixer, then transferred to a roller hearth kiln, and heated at a heating rate of 3°C/min to 760°C and sintered for 4 h in an air atmosphere. A resulting sintered material was cooled, then crushed by a jet mill, and sieved through a 300-mesh hand sieve to produce a spherical polycrystalline lithium manganese oxide cathode material uniformly doped with aluminum, boron, and fluorine.

A distribution of fluorine in the lithium manganese oxide was characterized through cross-sectional electron probe microanalysis. It could be known that fluorine was uniformly distributed in the lithium manganese oxide.

According to the electrical performance testing and Mn dissolution testing methods in Example 1, properties of the lithium manganese oxide cathode material prepared in this comparative example were determined. According to results, a coin cell fabricated with the lithium manganese oxide cathode material in this comparative example had a capacity retention rate of 97.4% after 50 cycles at 1 C and 60°C and a rate performance ratio 7 C/0.2 C of 87.4% at room temperature. Moreover, Mn dissolution amounts of the lithium manganese oxide cathode material under the charge states of 50% and 100% were 0.282 wt% and 0.396 wt%, respectively.

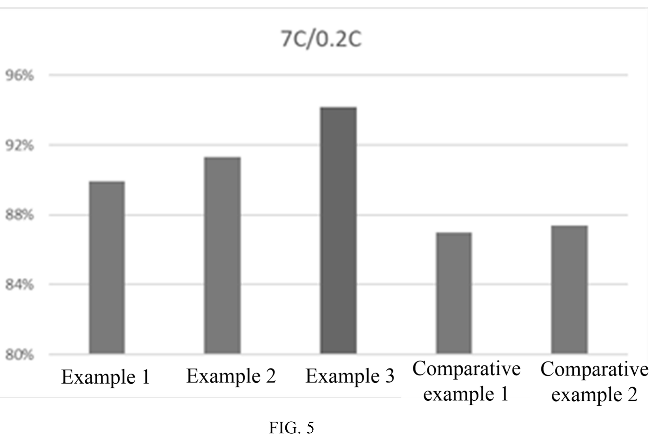

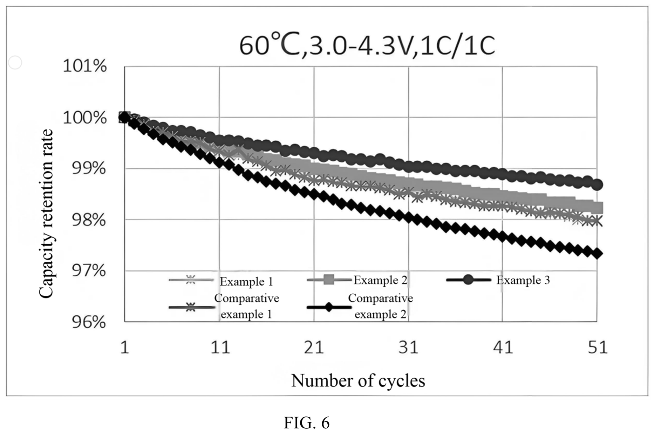

Fluorine distributions, Mn dissolution amounts, and electrochemical properties of the lithium manganese oxide cathode materials prepared in the examples and comparative examples were summarized in Table 1, FIG. 5, and FIG. 6.

**Table 1 Fluorine distributions, Mn dissolution amounts, and electrochemical properties of the lithium manganese oxide cathode materials prepared in the examples and comparative examples**

| | Fluorine distribution | | Mn dissolution amount in lithium manganese oxide | | Properties of a coin cell | |
|---|---|---|---|---|---|---|
| | 0.22 R ≤ L ≤ R | L < 0.22 R | Charge state of 50% | Charge state of 100% | Capacity retention rate after 50 cycles at 1 C and a high temperature | 7 C/0.2 C rate performance |
| Example 1 | 23% | 77% | 0.069% | 0.085% | 98.0% | 89.9% |
| Example 2 | 31% | 69% | 0.055% | 0.071% | 98.2% | 91.3% |
| Example 3 | 38% | 62% | 0.035% | 0.043% | 98.7% | 94.2% |
| Comparative Example 1 | 0% | 100% | 0.086% | 0.109% | 97.9% | 87.0% |
| Comparative Example 2 | 49% | 51% | 0.282% | 0.396% | 97.4% | 87.4% |

The comparison between Example 1 and Comparative Example 1 indicates that the addition of Al during the second sintering can promote the penetration of fluorine into lithium manganese oxide to achieve a gradient distribution of fluorine. The comparison between Example 3 and Comparative Example 2 further indicates that the lithium manganese oxide cathode material with a gradient distribution of fluorine exhibits better manganese dissolution, cycling, and rate properties than the lithium manganese oxide cathode material with fluorine uniformly doped. This is because the gradient distribution of fluorine enables the formation of stable structural layers in different gradient regions inside the material, which can stabilize the internal structure of the material and mitigate the Jahn-Teller effect. The comparison between the examples and comparative examples can also reveal that the gradient distribution of fluorine is not only related to the promotion effect of Al, but also facilitated by the temperature rise. This is primarily because the temperature rise can accelerate the diffusion of fluorine and make fluorine easily penetrate through lattice structures of lithium manganese oxide, thereby enhancing an infiltration rate of fluorine into the material. In addition, the temperature rise can reduce the lattice energy of lithium manganese oxide to allow the easy substitution by fluorine, which further promotes the gradient doping of fluorine.

## Claims

1. A lithium manganese oxide cathode material, wherein a chemical formula of the lithium manganese oxide cathode material is LiₐAl_{b}Mn_{2-b-c}B_{c}O_{4-d}F_{d}, wherein 0.96 ≤ a ≤ 1.15, 0 < b ≤ 0.3, 0 < c ≤ 0.03, and 0 < d ≤ 0.03; a secondary particle of the lithium manganese oxide cathode material is spherical; and a fluorine penetrates into the lithium manganese oxide cathode material, and a fluorine content presents a decreasing gradient distribution from a surface to a center of a lithium manganese oxide cathode material particle.

2. The lithium manganese oxide cathode material according to claim 1, wherein a fluorine content in a spherical region at a distance of 0.22 R ≤ L ≤ R from a surface of the lithium manganese oxide cathode material particle is 20% to 40% of a fluorine content in the lithium manganese oxide cathode material; and a fluorine content in a region at a distance of L < 0.22 R from the surface of the lithium manganese oxide cathode material particle is 60% to 80% of the fluorine content in the lithium manganese oxide cathode material, wherein R is an equivalent radius of the secondary particle of the lithium manganese oxide cathode material.

3. The lithium manganese oxide cathode material according to claim 1, wherein a sphericity of the lithium manganese oxide cathode material is 0.8 to 1.

4. The lithium manganese oxide cathode material according to claim 1, wherein a unit manganese dissolution amount in the lithium manganese oxide cathode material is 0.01% to 0.1%.

5. The lithium manganese oxide cathode material according to claim 1, wherein the secondary particle of the lithium manganese oxide cathode material has D50 of 10 µm to 16 µm and a particle size distribution coefficient Span of 0.5 to 0.9.

6. A preparation method of the lithium manganese oxide cathode material according to any one of claims 1 to 5, comprising the following steps:
(1) mixing a lithium source, a manganese source, and a boron source, and conducting first sintering to produce a lithium manganese oxide cathode material precursor; and
(2) mixing the lithium manganese oxide cathode material precursor with an aluminum source and a fluorine source, conducting second sintering, and sieving to produce the lithium manganese oxide cathode material.

7. The preparation method according to claim 6, wherein in the step (1), the first sintering is conducted at 700°C to 850°C for 4 h to 10 h.

8. The preparation method according to claim 6, wherein in the step (2), the second sintering is conducted at 300°C to 600°C for 2 h to 8 h.

9. The preparation method according to claim 6, wherein in the step (1), the manganese source comprises at least one selected from the group consisting of aluminum-doped manganese carbonate, aluminum-doped trimanganese tetraoxide, aluminum-doped dimanganese trioxide, aluminum-doped manganese oxyhydroxide, and aluminum-doped manganese dioxide;
the lithium source comprises at least one selected from the group consisting of lithium carbonate and lithium hydroxide; and
the boron source comprises at least one selected from the group consisting of H₃BO₃ and B₂O₃.

10. The preparation method according to claim 6, wherein in the step (2), the fluorine source comprises at least one selected from the group consisting of lithium fluoride, ammonium fluoride, aluminum fluoride, a polyvinylidene fluoride homopolymer, a polyvinylidene fluoride copolymer, a polyvinylidene fluoride-hexafluoropropylene polymer, and polytetrafluoroethylene; and
the aluminum source comprises at least one selected from the group consisting of aluminum hydroxide, aluminum oxide, and aluminum nitrate.
